# EUROPEAN PATENT APPLICATION

(11) **EP 1 568 468 A1**
(43) Date of publication of application: **31.08.2005**
(21) Application number: 03775896.8
(22) Date of filing: 26.11.2003
(51) Int. Cl.: B29C 55/06

(54) **METHOD FOR PRODUCING POLYBUTYLENE TEREPHTHALATE FILM**

(30) Priority: 26.11.2002 JP 2002342418
(71) Applicant: Kagawa, Seiji, Saitama 343-0807 (JP)
(72) Inventor: Kagawa, Seiji, Saitama 343-0807 (JP)
(74) Representative: Strehl Schübel-Hopf & Partner
(86) International application number: PCT/JP2003/015078
(87) International publication number: WO 2004/048071

(57) **Abstract**

A method for producing a polybutylene terephthalate film comprising extruding a molten polybutylene terephthalate resin through a T-die in the shape of a film; slowly cooling the resultant film in a substantially unoriented state to crystallize said polybutylene terephthalate resin; and orienting the crystallized film.

## Description

### FIELD OF THE INVENTION

The present invention relates to a method for producing a polybutylene terephthalate film having excellent thickness uniformity and thermal shrinkage resistance by a T-die method.

### BACKGROUND OF THE INVENTION

Because a polybutylene terephthalate (PBT) resin has excellent mechanical strength, heat resistance, chemical resistance, shock resistance, electric properties, etc., it has conventionally been attracting attention as an engineering plastic, and used as extrusion moldings for automobile parts, electric and electronic parts, etc. Because PBT also has excellent gas barrier and odor retention, thin PBT films having excellent thickness uniformity and thermal shrinkage resistance would be useful for wrapping sheets. However, PBT is disadvantageous in that it cannot be subjected to rapid orientation because of a low melt tension, and that a PBT film is likely to have wrinkles because its glass transition temperature is close to room temperature. Accordingly, it is extremely difficult to form a PBT resin into a smooth wrapping film having a uniform thickness of about 10 to 30 µm.

There are a T-die method and an inflation method as the film production method, and the inflation method is generally more suitable for the production of thin films than the T-die method because of high productivity. However, PBT films produced by the inflation method disadvantageously have large thickness unevenness and thermal shrinkage.

When a PBT film is produced by the T-die method, an unoriented film obtained by cooling a molten PBT resin extruded through a T-die is oriented so that it becomes thinner and have improved properties such as mechanical strength, etc. As a method for producing a PBT film by subjecting an unoriented film produced by a T-die method to biaxial orientation, JP 49-80178 A proposes a method of extruding molten PBT through a T-die onto a cooling roll at 65°C, for instance, and subjecting the resultant unoriented film to simultaneous biaxial orientation at a temperature that is a secondary transition temperature of PBT or higher and lower than the melting point by 10°C or more. JP 51-40904 B proposes a method of extruding molten PBT through a T-die onto a cooling roll, for instance, at 30°C, orienting the resultant unoriented film at a temperature that is a secondary transition temperature of PBT or higher and lower than the melting point by 10°C or more, and then orienting it at an orientation temperature at the first step or higher perpendicularly to an orientation direction at the first step. JP 51-146572 A proposes a method of orienting an unoriented film extruded through a T-die onto a cooling roll, for instance, at 30°C in a lateral direction at a temperature that is the glass transition temperature of PBT or higher and 100°C or lower, and then orienting it in a longitudinal direction at a temperature that is higher than an orientation temperature at the first step and the melting point of PBT or lower.

However, because unoriented films produced by rapidly cooling a molten PBT resin are biaxially oriented in these references, they have insufficient orientability, resulting in large thickness unevenness and thermal shrinkage ratios in the resultant films. To facilitate the biaxial orientation of a PBT film, methods of laminating it with another resin film, methods of blending it with well-compatible resins such as polyethylene and polypropylene, etc. have been proposed. However, any method has difficulty in forming as thin films as about 10 to 30 µm optimum for wrapping films.

### OBJECT OF THE INVENTION

Accordingly, an object of the present invention is to provide a method for producing a polybutylene terephthalate film having excellent thickness uniformity and thermal shrinkage resistance.

### SUMMARY OF THE INVENTION

As a result of intensive research in view of the above object, the inventor has found that when a molten polybutylene terephthalate resin film extruded through a T-die is slowly cooled in a substantially unoriented state for crystallization and then oriented, it is possible to obtain a polybutylene terephthalate film having excellent thickness uniformity and thermal shrinkage resistance. The present invention has been completed based on this finding.

Thus, the method for producing a polybutylene terephthalate film according to the present invention comprises extruding a molten polybutylene terephthalate resin through a T-die in the shape of a film; slowly cooling the resultant film in a substantially unoriented state to crystallize the polybutylene terephthalate resin; and orienting the crystallized film.

The unoriented polybutylene terephthalate resin film is preferably slowly cooled to a temperature ranging from the crystallization temperature of the polybutylene terephthalate resin - 40°C to the crystallization temperature + 20°C. The slow-cooling speed of the unoriented polybutylene terephthalate resin film is preferably 30°C/second or less. The crystallized unoriented film preferably has a thickness of 30 to 200 µm. The crystallized unoriented film is preferably oriented at least in a longitudinal direction. The crystallized unoriented film is preferably oriented at a temperature ranging from the crystallization temperature of the polybutylene terephthalate resin - 50°C to the crystallization temperature - 10°C. The degree of the orientation is preferably 1.5 times or more.

The oriented film is preferably reoriented at a temperature ranging from the crystallization temperature of the polybutylene terephthalate resin - 110°C to the crystallization temperature - 50°C. The degree of the reorientation is preferably 1.1 times or more. The reoriented film may be cold-oriented at a temperature ranging from room temperature to the glass transition temperature of the polybutylene terephthalate resin. The degree of the cold orientation is preferably 1.1 times or more. The polybutylene terephthalate resin preferably comprises 5 to 15% by mass of a polyolefin and/or an elastomer based on 100% by mass of the entire resin.

### BRIEF DESCRIPTION OF THE DRAWINGS

Fig. 1 is a schematic view showing one example of apparatuses for producing a polybutylene terephthalate film by the T-die method of the present invention;
Fig. 2 is a schematic view showing another example of apparatuses for producing a polybutylene terephthalate film by the T-die method of the present invention; and
Fig. 3 is a schematic view showing a further example of apparatuses for producing a polybutylene terephthalate film by the T-die method of the present invention.

### DETAILED DESCRIPTION OF THE PREFERRED EMBODIMENTS

### [1] Polybutylene terephthalate resin

Though not particularly restricted, the polybutylene terephthalate (PBT) resin as a starting material is preferably a homopolymer comprising 1,4-butanediol and terephthalic acid as constituents. Within ranges not deteriorating properties such as thermal shrinkage resistance, etc., other diols than 1,4-butanediol and other carboxylic acids than terephthalic acid may be included as comonomers. Such diols may be, for instance, ethylene glycol, diethylene glycol, neopentyl glycol, 1,4-cyclohexanemethanol, etc. The dicarboxylic acids may be, for instance, isophthalic acid, sebacic acid, adipic acid, azelaic acid, succinic acid, etc. A specific example of PBT resins forming the PBT film may be, for instance, a homo-PBT resin commercially available from Toray Industries, Inc. under the tradename of "Toraycon."

The PBT resin is not restricted to PBT only, but may contain other thermoplastic resins within ranges not hindering the effects of the present invention depending on its applications. The other thermoplastic resins may be polyesters such as polyethylene terephthalate (PET) and polyethylene naphthalate (PEN); polyphenylene sulfide (PPS); polyamides (PA); polyimides (PI); polyamideimides (PAI); polyethersulfone (PES); poltetheretherketone (PEEK); polycarbonates; polyurethanes; fluororesins; polyolefins such as polyethylene and polypropylene; polyvinyl chlorides; elastomers, etc. Particularly when the PBT resin contains a polyolefin and/or an elastomer such as polyethylene, polypropylene, etc., the PBT resin has high melt viscosity and melt tension, resulting not only in improved orientability but also in improved mechanical strength and heat-sealability of the resultant film. Particularly preferable is that the PBT resin contains polyethylene. When the other thermoplastic resins are contained, their proportions are preferably 5 to 15% by mass, more preferably 5 to 10% by mass, based on the entire PBT resin (100% by mass). Accordingly, unless otherwise particularly mentioned, it should be noted that the term "polybutylene terephthalate resin" used herein includes both PBT only, and a composition comprising PBT and other thermoplastic resins.

The PBT film may properly contain known additives added to usual thermoplastic resins and thermosetting resins, such as plasticizers, stabilizers such as antioxidants, UV absorbents, etc., antistatics, surfactants, coloring agents such as dyes and pigments, lubricants for improving flowability, nucleating agents, inorganic fillers, etc., depending on properties required.

### [2] Production method of PBT film

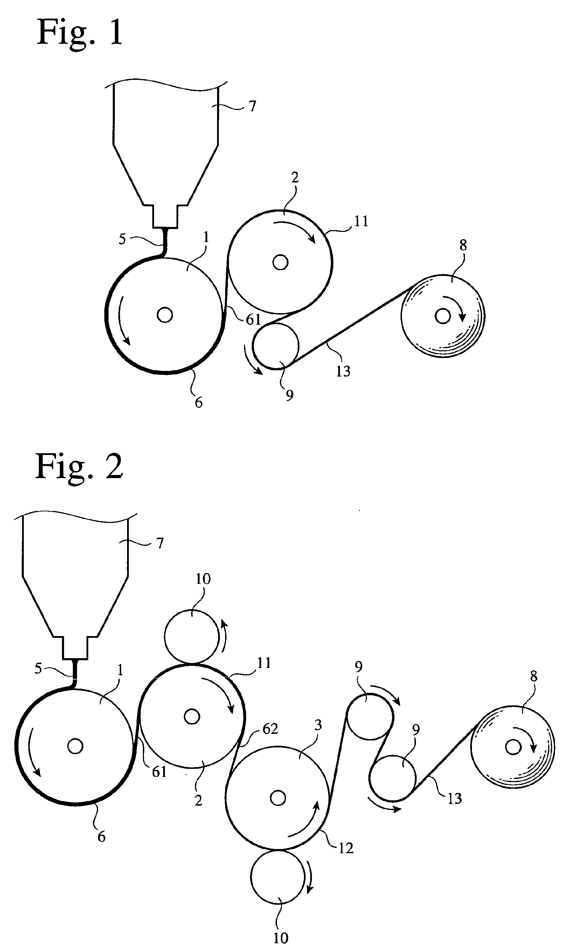

Fig. 1 shows one example of apparatuses for producing a PBT film by the T-die method of the present invention. A film 5 obtained by extruding a molten PBT resin through a T-die 7 is taken by a heated casting roll 1 for slow cooling to form a crystallized unoriented film 6. The crystallized unoriented film 6 is oriented between the heated casting roll 1 and a second roll 2 parallel thereto, and then wound around a reel 8 via a guide roll 9.

### (a) Formation of crystallized unoriented film

### (i) Melt blending step

A PBT resin is melt-blended with additives, etc. described in [1] above to prepare a molten PBT resin. Though not particularly restrictive, the melt blending is usually conducted by uniform blending in a double-screw extruder. The blending temperature is preferably from the melting point of the PBT resin + 10°C to the melting point + 40°C. When the blending temperature is higher than the melting point of the PBT resin + 40°C, thermal degradation is likely to occur in the resin. Accordingly, when the blending is conducted in an extruder, those with screw structures avoiding heat generation, or those having proper cooling means are used. When the lower limit of the blending temperature is lower than the melting point of the PBT resin + 10°C, an extrusion rate is undesirably unstable. When the PBT resin is a homopolymer, for instance, the blending temperature is 230 to 270°C, because its melting point is about 220 to 230°C. The melting point is herein measured according to ASTM D4591.

A blended molten PBT resin is extruded directly from the extruder or from a T-die 7 via another extruder, or extruded again through a T-die 7 via another extruder after palletized by cooling. The T-die 7 usually has a gap of 5 mm or less. The temperature of a resin extruded through the T-die 7 is preferably from the melting point of the PBT resin - 10°C to the melting point + 30°C, more preferably from the melting point of the PBT resin to the melting point + 10°C.

### (ii) Slow cooling step

A film 5 obtained by extruding the molten PBT resin through the T-die 7 is taken by the heated casting roll 1, by which it is slowly cooled to form a crystallized unoriented film 6 with improved orientability. Accordingly, less unevenness in a film thickness is obtained when the crystallized unoriented film is formed into a thin film by orientation, than when an amorphous unoriented film is formed into a thin film.

The temperature of the heated casting roll 1 is preferably from the crystallization temperature of the PBT resin - 40°C to the crystallization temperature + 20°C. The term "crystallization temperature" used herein means a temperature at a crystallization peak detected by a differential scanning calorimeter (DSC) when a sample melted at 250°C is cooled by 20°C/minute. When the PBT resin is a homopolymer, for instance, its crystallization temperature is about 170 to 190°C. The extruded film 5 in contact with the heated casting roll 1 in this temperature range is slowly cooled to a temperature ranging from the crystallization temperature of the PBT resin - 40°C to the crystallization temperature + 20°C.

When the temperature of the roll 1 is higher than the crystallization temperature of the PBT resin + 20°C, the unoriented film 6 is not crystallized. On the other hand, when the temperature of the roll 1 is lower than the crystallization temperature of the PBT resin - 40°C, the extruded film 5 is too quickly cooled, the resultant unoriented film 6 has low crystallinity and thus low orientability. The extruded film 5 is more preferably slowly cooled to a temperature ranging from the crystallization temperature of the PBT resin - 35°C to the crystallization temperature + 10°C.

When a heating means is not disposed between the T-die 7 and the heated casting roll 1, the distance between the T-die 7 and the heated casting roll 1 is preferably as small as possible to secure a sufficiently slow cooling speed, specifically 20 cm or less.

The slow cooling speed is preferably 30°C/second or less, more preferably 20°C/second or less, particularly 10°C/second or less. Unless the extruded film 5 is slowly cooled, sufficient crystallization does not occur. Though not particularly restrictive, the lower limit of the slow cooling speed is preferably 0.3°C/second from the aspect of productivity.

To achieve easy orientation at subsequent steps, the thickness of the crystallized unoriented film 6 is preferably 30 to 200 µm, more preferably 35 to 100 µm. To provide the crystallized unoriented film 6 with a thickness of 30 to 200 µm, and to suppress a neck-in phenomenon, by which a film cast onto the heated casting roll 1 becomes narrower than the effective width of the T-die 7, at the time of forming the crystallized unoriented film 6, the peripheral speed of the heated casting roll 1 is preferably 5 to 20 m/minute, more preferably 5 to 15 m/minute. The heated casting roll 1 preferably has a diameter of 35 to 70 cm. If necessary, pluralities of heated casting rolls 1 may be disposed. In this case, each heated casting roll 1 may have the same peripheral speed, each heated casting roll 1 may have the same temperature, and their temperatures may decrease downward in a range from the crystallization temperature of the PBT resin - 40°C to the crystallization temperature + 20°C.

### (b) Orienting

### (i) Orienting step

As shown in Fig. 1, the crystallized unoriented film 6 is oriented in a longitudinal direction (MD) with difference in a peripheral speed between the heated casting roll 1 and the second roll 2. The crystallized unoriented film 6 is preferably oriented at a temperature ranging from the crystallization temperature of the PBT resin - 50°C to the crystallization temperature - 10°C. Making it possible to set the melt tension in a range suitable for relatively high-degree orientation, uniform orientation with little thickness unevenness can be achieved. The orientation temperature is preferably from the crystallization temperature of the PBT resin - 50°C to the crystallization temperature - 30°C. Because an orientation region 61, in which the crystallized unoriented film 6 is oriented, is located between the heated casting roll 1 and the second roll 2, the distance between the two rolls (distance between both points of contact on a common tangent line of the two rolls) is preferably 10 cm or less, such that the orientation region 61 is in the above preferred orientation temperature range. With the roll distance of 10 cm or less, the orientation region 61 may be relatively narrow, thereby suppressing the neck-in phenomenon more effectively. To keep a temperature constant in the orientation region 61, a heating means may be disposed between both rolls to heat the crystallized unoriented film 6. The oriented film is preferably cooled by the second roll 2 to the crystallization temperature of the PBT resin -140°C or lower, to stabilize the oriented state.

Though the degree of orientation may differ depending on the thickness of the crystallized unoriented film 6, it is preferably 1.5 times or more, more preferably 1.8 to 4 times. The larger degree of orientation provides the oriented film with higher transparency. With a peripheral speed ratio properly set between the heated casting roll 1 and the second roll 2, the desired degree of orientation can be achieved. The diameter of the second roll 2 is not restrictive but may be 35 to 70 cm like the heated casting roll 1.

### (ii) Reorienting step

The oriented film obtained by the above step (i) may be longitudinally reoriented, to provide it with improved transparency and smaller thickness. Fig. 2 shows one example of apparatuses for carrying out a reorientation step after the orientation step. This apparatus is the same as the apparatus shown in Fig. 1, except that a nip roll 10 is disposed on the roll 2, and that a pair of rolls 3, 10 are disposed between the roll 2 and the roll 9. Thus, explanation will be concentrated on the function of a pair of rolls 3, 10 below.

The reorientation is achieved by a peripheral speed difference between the second roll 2 and the third roll 3 in the apparatus shown in Fig. 2. The temperature of an orientation region 62 between the second roll 2 and the third roll 3 is preferably in a range from the crystallization temperature of the PBT resin - 110°C to the crystallization temperature - 50°C, more preferably in a range from the crystallization temperature of the PBT resin - 90°C to the crystallization temperature - 50°C. In order that the orientation region 62 has a temperature in the above preferred range, it is preferable that the oriented film 11 obtained by the above step (i) is treated by the second roll 2 at a temperature ranging from the crystallization temperature of the PBT resin - 90°C to the crystallization temperature - 30°C, and that the distance between the second roll 2 and the third roll 3 is 10 cm or less. The treatment temperature by the second roll 2 is more preferably from the crystallization temperature of the PBT resin - 80°C to the crystallization temperature - 40°C. The reoriented film 12 is preferably cooled by the third roll 3 to the crystallization temperature of the PBT resin - 140°C or lower. The diameter of the third roll 3 may be 35 to 70 cm like the second roll 2. The degree of reorientation is preferably 1.1 times or more, more preferably 1.3 to 3 times.

### (iii) Cold-orienting step

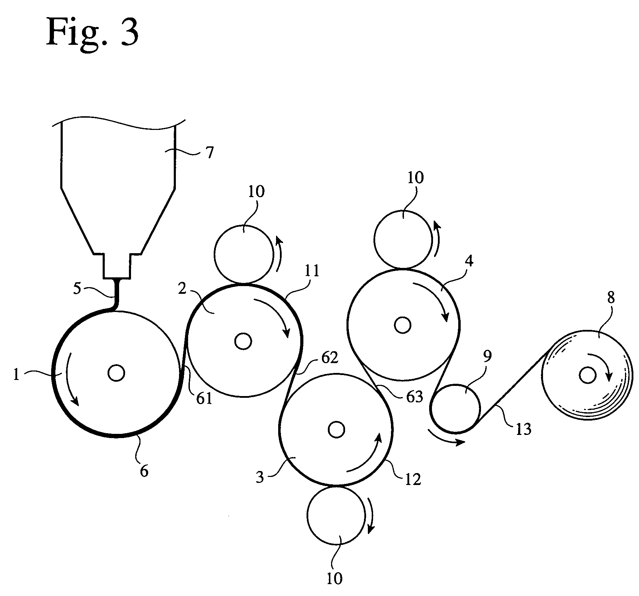

The reoriented film may further be longitudinally cold-oriented. Fig. 3 shows one example of apparatuses for carrying out a cold orientation step after the reorientation step. This apparatus is the same as the apparatus shown in Fig. 2, except that there is a pair of rolls 4, 10 between the roll 3 and the roll 9. Accordingly, explanation will be concentrated on the function of a pair of rolls 4, 10. The cold orientation is achieved by a peripheral speed difference between a third roll 3 and a fourth roll 4 shown in Fig. 3. The temperature of the orientation region 63 between the third roll 3 and the fourth roll 4 is preferably in a range from room temperature to the glass transition temperature (Tg) of the PBT resin. The glass transition temperature Tg is measured according to JIS K7121. The Tg of a homo-PBT resin is generally 22°C to 45°C. To set the temperature of the orientation region 63 in the above preferred range, it is preferable that the reoriented film 12 is treated by the third roll 3 at a temperature ranging from the crystallization temperature of the PBT resin - 110°C to the crystallization temperature - 80°C, and that the distance between the third roll 3 and the fourth roll 4 is 10 cm or less. The treatment temperature by the third roll 3 is more preferably from the crystallization temperature of the PBT resin - 140°C to the crystallization temperature - 90°C. Such cold orientation can further improve the transparency of a film. The diameter of the fourth roll 4 may be 35 to 70 cm like the third roll 3. The degree of cold orientation is preferably 1.1 times or more, more preferably 1.3 to 3 times.

### (iv) Other embodiments

Only the above orientation step (i) may be conducted using the apparatus shown in Fig. 2. In this case, the cooling treatment can be conducted for a longer period of time, for instance, by cooling the oriented film 11 to the crystallization temperature of the PBT resin - 140°C or lower while rotating the third roll 3 at the same peripheral speed as that of the second roll 2. Also, when the cooling treatment is conducted by the third roll 3, the oriented film 11 may be annealed by the second roll 2 at a temperature higher than the glass transition temperature (Tg) of the PBT resin and the crystallization temperature - 10°C or lower, resulting in the PBT film with further improved thermal shrinkage resistance.

Using the apparatus shown in Fig. 3, orientation may be conducted up to the above reorientation step (ii). In this case, using the fourth roll 4 as a cooling roll makes it possible to conduct the cooling treatment of the reoriented film 12 for a longer period of time. Also, when the cooling treatment is conducted by the fourth roll 4, the reoriented film 12 may be annealed by the third roll 3 at a temperature higher than the glass transition temperature (Tg) of the PBT resin and the crystallization temperature - 10°C or lower.

### (v) Lateral-orienting step

The PBT film produced by any one of the above steps (i) to (iv) may subsequently be oriented in a lateral direction (TD). Lateral orientation may be conducted by known methods such as a tenter method, etc.

### (c) Heat treatment

The PBT film produced by the above method has better thermal shrinkage resistance than those produced by conventional production methods without further treatment, though a heat treatment may further be conducted to improve its thermal shrinkage resistance. The heat treatment may be a heat setting treatment and/or a thermal shrinking treatment. These heat treatments are preferably conducted at a temperature higher than the glass transition temperature of the PBT film and the crystallization temperature - 10°C or lower.

The heat setting treatment may be conducted by a tenter method, a roll method or a rolling method. The thermal shrinking treatment may be conducted by a tenter method, a roll method, a rolling method, a belt conveyor method or a floating method.

### [3] PBT film

The PBT film produced as described above is translucent to transparent, and better in thickness uniformity and thermal shrinkage resistance than the conventional oriented PBT films. Specifically, the film having an average thickness of 8 to 20 µm has thickness variation of 1 to 3 µm, with thermal shrinkage ratios of 0.3% or less in MD (longitudinal direction) and 0.5% or less in TD (lateral direction). Accordingly, a printing layer and a metal vapor deposition layer can be formed with little unevenness. In addition, the film is subjected to little size variation in a secondary working such as heat sealing, printing, etc. The average thickness of the PBT film is an average value of the measured thickness in a center portion and both edge portions in a lateral direction at two points each, thus at six points in total. The thickness variation is a difference calculated from the maximum and the minimum among those measured in a center portion and both edge portions at two points each and thus six points in total in a lateral direction. The smaller this value, the better results are obtained. The thermal shrinkage ratio is measured in MD and TD on the PBT film exposed at 150°C for 10 minutes.

The PBT film obtained by the production method of the present invention may be laminated with other films, if necessary.

The present invention will be explained in more detail referring to Examples below without intention of restricting the present invention thereto.

### Example 1

A PBT resin having a melting point of 220°C, a glass transition temperature of 22°C and a crystallization temperature of 182°C ("Toraycon 1200S" (tradename) commercially available from Toray Industries, Inc.) was charged into a double-screw extruder (screw diameter: 300 mm, extrusion rate: 50 kg/hr), in which it was melt-blended at 235 ± 5°C to prepare a molten PBT resin. Using the apparatus shown in Fig. 3, this molten PBT resin was extruded through a T-die 7 mounted to a tip end of the extruder, and cast onto a 50-cm-diameter casting roll 1 controlled at 170°C and rotating at a peripheral speed of 10 m/minute. The extruded film 5 was slowly cooled at a speed of 9°C/second on the heated casting roll 1 to form a crystallized unoriented film 6 having an average thickness of 50 µm.

The crystallized unoriented film 6 was oriented 2 times between the heated casting roll 1 and the second roll 2 (peripheral speed: 20 m/minute) controlled at 130°C with a roll distance of 5 cm. The oriented film 11 was further reoriented 2 times between the second roll 2 and the third roll 3 (peripheral speed: 40 m/minute) controlled at 80°C with a roll distance of 5 cm. The reoriented film 12 was cooled by the fourth roll 4 (peripheral speed: 40 m/minute) controlled at 35°C to form a PBT film 13 having an average thickness of 13 µm. The measurement of the PBT film 13 revealed that it had a thickness variation of 2 µm and thermal shrinkage ratios of 0.1 % in a longitudinal direction and 0.2% in a lateral direction.

### Example 2

A crystallized unoriented film 6 having an average thickness of 40 µm was formed in the same manner as in Example 1, except that the heated casting roll 1 had a temperature of 150°C, a peripheral speed of 15 m/minute, and a slow cooling speed of 18°C/second, and that the apparatus shown in Fig. 2 was used. The crystallized unoriented film 6 was oriented 2 times between the heated casting roll 1 and the second roll 2 (peripheral speed: 30 m/minute) controlled at 100°C with a roll distance of 5 cm. The oriented film 11 was cooled by the third roll 3 (peripheral speed: 30 m/minute) controlled at 35°C to form a PBT film 13 having an average thickness of 20 µm. The measurement of the PBT film revealed that it had a thickness variation of 2 µm and thermal shrinkage ratios of 0.1 % in a longitudinal direction and 0.15% in a lateral direction.

### Example 3

A crystallized unoriented film 6 having an average thickness of 40 µm was formed in the same manner as in Example 1, except that the heated casting roll 1 had a temperature of 180°C, a peripheral speed of 15 m/minute and a slow cooling speed of 12°C/second. The crystallized unoriented film 6 was oriented 2 times between the heated casting roll 1 and the second roll 2 (peripheral speed: 30 m/minute) controlled at 130°C with a roll distance of 5 cm. The oriented film 11 was further reoriented 1.5 times between the second roll 2 and the third roll 3 (peripheral speed: 45 m/minute) controlled at 60°C with a roll distance of 5 cm. The reoriented film 12 was cold-oriented 1.5 times between the third roll 3 and the fourth roll 4 (peripheral speed: 67.5 m/minute) controlled at 25°C with a roll distance of 5 cm, to form a PBT film 13 having an average thickness of 8 µm. The measurement of the PBT film 13 revealed that it had a thickness variation of 2 µm and thermal shrinkage ratios of 0.2% in a longitudinal direction and 0.2% in a lateral direction.

### Comparative Example 1

A PBT film 13 having an average thickness of 13 µm was formed in the same manner as in Example 1 except that the temperature of the casting roll 1 was 60°C. The measurement of the PBT film 13 revealed that it had a thickness variation of 4 µm and thermal shrinkage ratios of 15% in a longitudinal direction and 20% in a lateral direction.

The PBT films of Examples 1 to 3 had excellent thickness uniformity and low thermal shrinkage ratios, because a film obtained by extruding a molten PBT resin through a T-die was slowly cooled on the heated casting roll 1, and because the resultant crystallized unoriented film was oriented. On the other hand, the PBT film of Comparative Example 1 had larger thickness variation and a poorer thermal shrinkage ratio than those of Examples 1 to 3, because an amorphous unoriented film obtained by rapidly cooling a molten PBT resin was oriented.

Though the present invention has been explained above referring to Examples, the present invention is not restricted thereto, and various modifications may be added thereto unless they deviate from the scope of the present invention.

### APPLICABILITY IN INDUSTRY

As described above in detail, because the method for producing a polybutylene terephthalate film according to the present invention comprises extruding the molten polybutylene terephthalate resin in the shape of a film through a T-die, slowly cooling the resultant film in a substantially unoriented state to crystallize the polybutylene terephthalate resin, and orienting the crystallized film, the resultant polybutylene terephthalate film has excellent thickness uniformity and thermal shrinkage resistance. Therefore, the polybutylene terephthalate film obtained by the production method of the present invention are suitable for various applications such as wrapping sheets, wrapping bags, lids for instant food containers, etc.

## Claims

1. A method for producing a polybutylene terephthalate film comprising extruding a molten polybutylene terephthalate resin through a T-die in the shape of a film; slowly cooling the resultant film in a substantially unoriented state to crystallize said polybutylene terephthalate resin; and orienting the crystallized film.

2. The method for producing a polybutylene terephthalate film according to claim 1, wherein said unoriented polybutylene terephthalate resin film is slowly cooled to a temperature ranging from the crystallization temperature of said polybutylene terephthalate resin - 40°C to the crystallization temperature + 20°C.

3. The method for producing a polybutylene terephthalate film according to claim 1 or 2, wherein the slow-cooling speed of said unoriented polybutylene terephthalate resin film is 30°C/second or less.

4. The method for producing a polybutylene terephthalate film according to any one of claims 1 to 3, wherein said crystallized unoriented film has a thickness of 30 to 200 µm.

5. The method for producing a polybutylene terephthalate film according to any one of claims 1 to 4, wherein said crystallized unoriented film is oriented at least in a longitudinal direction.

6. The method for producing a polybutylene terephthalate film according to any one of claims 1 to 5, wherein said crystallized unoriented film is oriented at a temperature ranging from the crystallization temperature of said polybutylene terephthalate resin - 50°C to the crystallization temperature - 10°C.

7. The method for producing a polybutylene terephthalate film according to any one of claims 1 to 6, wherein the degree of said orientation is 1.5 times or more.

8. The method for producing a polybutylene terephthalate film according to claim 6 or 7, wherein the oriented film is reoriented at a temperature ranging from the crystallization temperature of said polybutylene terephthalate resin - 110°C to the crystallization temperature - 50°C.

9. The method for producing a polybutylene terephthalate film according to claim 8, wherein the degree of said reorientation is 1.1 times or more.

10. The method for producing a polybutylene terephthalate film according to claim 8 or 9, wherein the reoriented film is cold-oriented at a temperature ranging from room temperature to the glass transition temperature of said polybutylene terephthalate resin.

11. The method for producing a polybutylene terephthalate film according to claim 10, wherein the degree of said cold orientation is 1.1 times or more.

12. The method for producing a polybutylene terephthalate film according to any one of claims 1 to 11, wherein said polybutylene terephthalate resin comprises 5 to 15% by mass of a polyolefin and/or an elastomer based on 100% by mass of the entire resin.
